**Europäisches Patentamt**

(19) **European Patent Office**

**Office européen des brevets**

(11) Veröffentlichungsnummer: **0 027 984**
**B1**

(12) **EUROPÄISCHE PATENTSCHRIFT**

(45) Veröffentlichungstag der Patentschrift:
23.01.85

(51) Int. Cl.⁴: **G 21 C 5/06,** G 21 C 15/02

(21) Anmeldenummer: **80106368.6**

(22) Anmeldetag: **20.10.80**

(54) **Siedewasserreaktor.**

(30) Priorität: **30.10.79 SE 7908959**

(43) Veröffentlichungstag der Anmeldung:
**06.05.81 Patentblatt 81/18**

(45) Bekanntmachung des Hinweises auf die Patenterteilung:
**23.01.85 Patentblatt 85/4**

(84) Benannte Vertragsstaaten:
**BE CH DE FR GB IT LI NL**

(56) Entgegenhaltungen:
**FR - A - 2 222 731**
**US - A - 3 389 056**
**US - A - 3 398 050**
**US - A - 3 401 081**
**US - A - 3 671 394**

(73) Patentinhaber: **AB ASEA-ATOM, S-721 83 Västeras (SE)**

(72) Erfinder: **Borrmann, Bo, Rörverksgatan 16,**
**S-724 74 Västerås (SE)**
Erfinder: **Nylund, Olov, Dipl.-Ing., Ragnaröksgatan 17,**
**S-720 17 Västerås (SE)**
Erfinder: **Schölin, Bertil, Bysägsgatan 10,**
**S-724 81 Västerås (SE)**

(74) Vertreter: **Boecker, Joachim, Dr.-Ing.,**
**Rathenauplatz 2-8, D-6000 Frankfurt a.M. 1 (DE)**

## Beschreibung

Die Erfindung betrifft einen Siedewasserreaktor gemäß dem Oberbegriff des Anspruches 1. Durch die Drosselöffnungen wird der Kühlwasserfluß auf die einzelnen Brennelementenbündel so verteilt, daß die Kühlung und der Abtransport der entwickelten Wärme in den verschiedenen Teilen des Kernes ausreichend groß ist. Ein solcher Siedewasserreaktor ist bekannt aus der US-A-3 389 056.

Bei dem aus der US-A-3 389 056 bekannten Reaktor sind die Brennelementenbündel mit ihrem Bodenteil in je ein Loch der unteren Gitterplatte eingesetzt, wobei eine mechanische Verklinkung die Brennelementbündel gegen eine vertikal nach oben gerichtete Kraft an der unteren Gitterplatte festhält. Diese mit Blattfedern aufgebaute Verklinkungseinrichtung ist aufwendig, kompliziert und störanfällig. Die in der Gitterplatte wirksam werdende Drosselöffnung besteht aus einer am unteren Ende des Brennelementenbündels einsetzbaren Drosselscheibe.

Aus der US-A-3 401 081 ist ein Brennelementenbündel bekannt, bei dem das Festhalten des Bündels in der unteren Gitterplatte gegen nach oben gerichtete Kräfte auf hydraulischem Wege erreicht wird, wobei das Bodenteil des Brennelementenbündels in vertikaler Richtung nach unten geschlossen ist und die Öffnungen sich an den Seiten befinden, so daß das Kühlwasser in horizontaler Richtung in das Brennelementenbündel einströmt. Ferner ist das Bodenteil im unteren Strömungsbereich mit einem sich zunächst verengenden und dann wieder erweiternden Venturi-Diffusor versehen. Bei dieser Anordnung treten Wirbelungen und Umlenkungen im Einströmungsbereich in das Bodenteil auf. Die untere Gitterplatte ist mit einem entsprechend geformten Topf versehen, in den das Bodenteil hineinpaßt. An der Gitterplatte selbst bzw. an dem genannten Topf ist keine Drosselöffnung vorhanden.

Der Erfindung liegt die Aufgabe zugrunde, einen Siedewasserreaktor der eingangs genannten Art zu entwickeln, bei der zum Festhalten des Brennelementenbündels in der unteren Gitterplatte keine mechanischen Einrichtungen erforderlich sind und das einströmende Wasser keine starken Richtungsänderungen erfährt. Der Erfindung liegt ferner die Aufgabe zugrunde, den Druckabfall an den Drosselöffnungen der unteren Gitterplatte zu verringern, so daß eine zweite Drosselung zur Sicherstellung einer gleichmäßigen Kühlwasserverteilung auf parallele Brennelementenkästen in den Brennelementenbündeln verwendet werden kann, in denen die Brennelemente auf mehrere kleinere Brennelementenkästen verteilt sind.

Zur Lösung dieser Aufgabe wird ein Siedewasserreaktor nach dem Oberbegriff des Anspruches 1 vorgeschlagen, der erfindungsgemäß die im kennzeichnenden Teil des Anspruches 1 genannten Merkmale hat.

Vorteilhafte Weiterbildungen der Erfindung sind in den abhängigen Ansprüchen genannt.

Das Bodenteil des Brennelementenbündels ragt auf bekannte Weise in eine Aufnahmevorrichtung hinein, bei der es sich normalerweise um eine Ausbohrung handelt, die koaxial zur Drosselöffnung liegt. Gemäß der Erfindung ist das Bodenteil des Brennelementenbündels so ausgebildet, daß zwischen ihm und der Ausbohrung eine ringförmige Kammer gebildet wird und daß sich zwischen dem Bodenteil des Brennelementenbündels und dem Boden der Ausbohrung ein Spalt bildet. Über diesen Spalt steht die genannte ringförmige Kammer mit dem Strömungskanal durch die Gitterplatte und das Bodenteil in Verbindung. Hierdurch kommt eine Drucksenkung in der ringförmigen Kammer zustande, die eine nach unten gerichtete Kraft zur Folge hat, die bestrebt ist, das Brennelementenbündel nach unten zu ziehen. Diese Kraft wirkt der Auftriebskraft entgegen, die infolge des Strömungswiderstandes in den Brennelementenbündeln entsteht.

Dadurch, daß nach einer Weiterbildung der Erfindung der im Bodenteil der Brennelementenbündel vorhandene Diffusor als austauschbare Einheit ausgebildet ist, kann der Kühlwasserfluß im Brennelementenbündel durch Wahl der Diffusoreinheit eingestellt werden und braucht nicht, wie bisher, bei der Verteilung des Kühlwasserflusses auf die einzelnen Brennelementenbündel im Brennstoffkern mit Hilfe austauschbarer Steuervorrichtungen in der unteren Gitterplatte eingestellt zu werden. Hierdurch wird eine Änderung der Verteilung des Kühlwasserflusses auf den Kernquerschnitt erleichtert. Die untere Gitterplatte kann mit festen Drosselöffnungen versehen werden, was eine erhebliche Vereinfachung der Konstruktion darstellt.

Bei der Aufteilung der Brennstäbe eines Brennelementenbündels in mehrere Teilbündel, von denen jedes von einem Brennelementenkasten umgeben ist, ist es aufgrund der Erfindung möglich, einen Teil der Drosselung in die unmittelbare Nähe des Wassereinlaufes zu den individuellen, parallel zueinander angeordneten Brennelementenkästen in dem Brennelementenbündel zu verlegen. Es wird eine Drosselung ermöglicht, die eine zweckmäßige, vorzugsweise gleichmäßige Verteilung von Kühlwasser auf die Kästen sicherstellt. Diese Drosselung kann zweckmäßigerweise in Form von Drosselöffnungen in den Grundplatten der Kästen vorgesehen werden, welche Grundplatten auch als untere Befestigung für die Brennstäbe dienen können.

Anhand der in den Figuren gezeigten Ausführungsbeispiele soll die Erfindung näher erläutert werden. Es zeigt

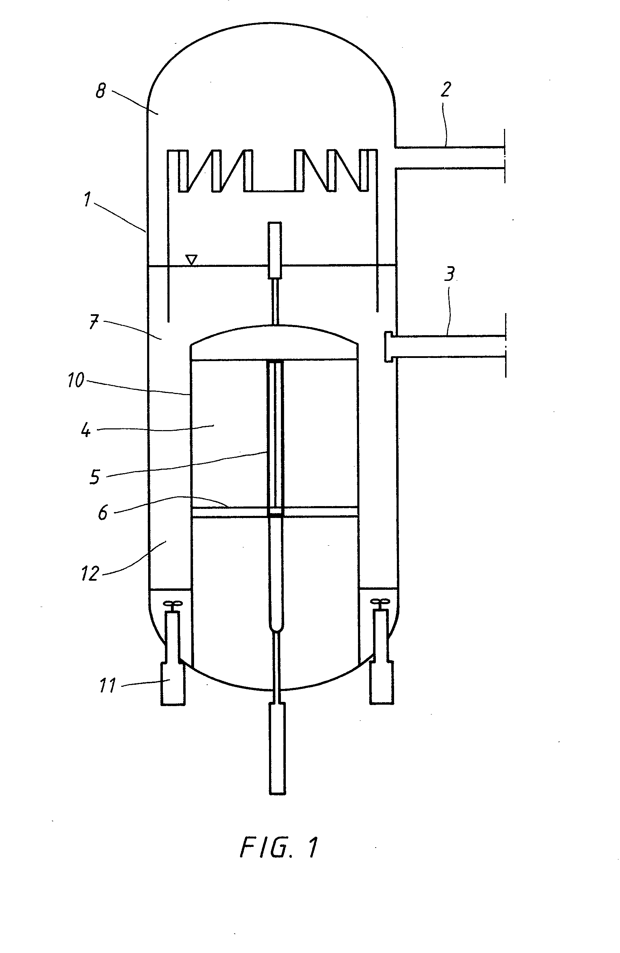

Fig. 1 schematisch einen Schnitt durch einen Siedewasserreaktor,

Fig. 2 einen Schnitt durch den unteren Teil eines Brennelementenbündels und eines Teils der Gitterplatte gemäß einem Ausführungsbeispiel der Erfindung,

Fig. 3 die gleiche Schnittdarstellung wie in Fig. 2 für ein anderes Ausführungsbeispiel gemäß der Erfindung.

In den Figuren bezeichnet 1 einen Reaktorbehälter. Dampf vom Reaktor wird über die Leitung 2 entnommen, und Speisewasser wird über die Leitung 3 zugeführt. Im Reaktorbehälter befindet sich ein Reaktorkern 4, der mehrere Brennelementenbündel 5 enthält, die von einer unteren Gitterplatte 6 getragen werden. Der untere Teil 7 des Reaktorbehälters 1 enthält Wasser und der obere Teil 8 desselben enthält Dampf. Der Reaktorkern 4 wird von einem ringförmigen Schirm 10 umgeben. Zirkulationspumpen 11 saugen Wasser durch den Spalt 12 zwischen Reaktorbehälter 1 und Schirm 10 nach unten und pressen Wasser durch die Brennelementenbündel 5 des Reaktorkerns 4 nach oben.

Die Brennelementenbündel 5 enthalten je vier parallele Brennelementenkästen 13, die oben an ein gemeinsames zusammenhaltendes Oberteil und unten an ein Bodenteil 14 angeschlossen sind. Das Oberteil, die Brennelementenkästen 13 und das Bodenteil 14 werden durch eine Zugstange 15 zusammengehalten. Das Einströmteil des Bodenteils ist wie ein Venturidiffusor 16 ausgebildet; es kann jedoch auch als Stufendiffusor ausgebildet werden. Das untere Teil des Bodenteils ragt in eine Ausbohrung 17 hinein, die an ihrem oberen Rand eine konische Fläche 18 hat. Das untere Teil des Bodenteils 14 ist mit Führungen 19 versehen, die das Brennelementenbündel bei der Montage in die Ausbohrung 17 hineinführen. Das untere Teil des Bodenteils 14 ist ferner mit einem Tragring 20 versehen, der eine konische Fläche 21 hat, die der konischen Fläche 18 der Ausbohrung 17 angepaßt ist.

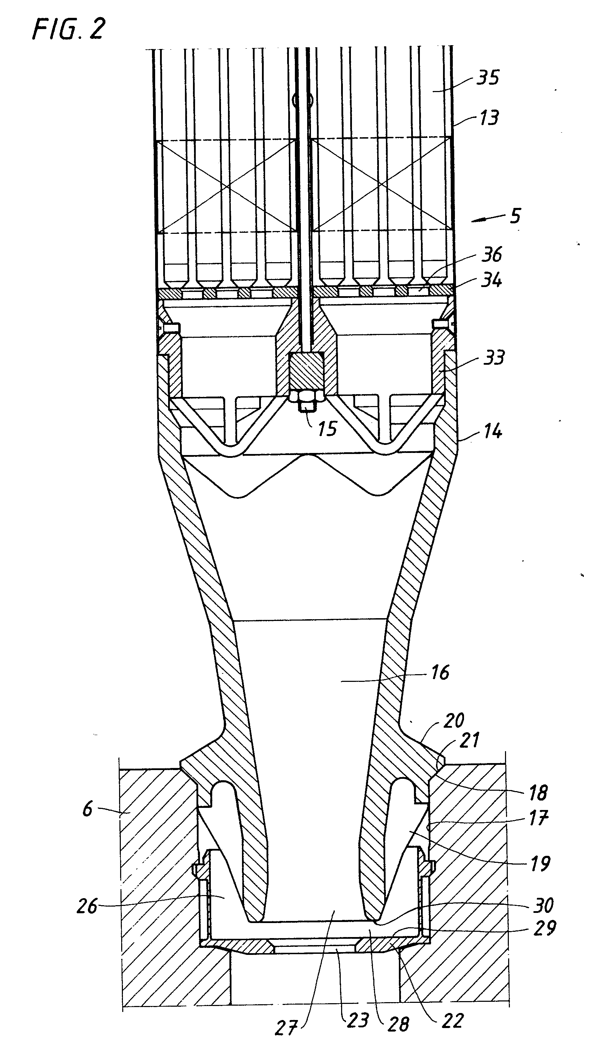

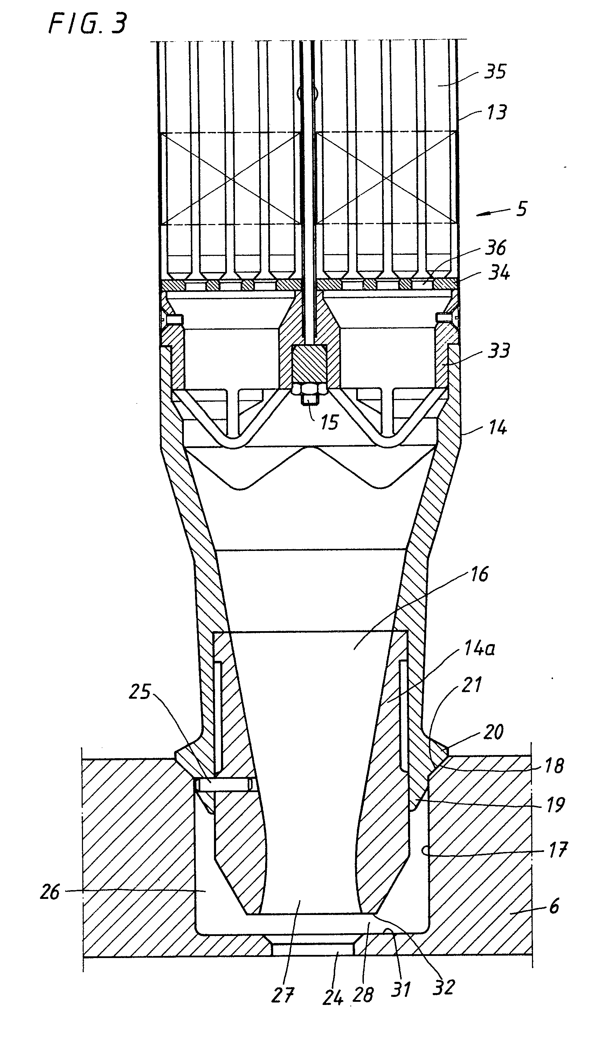

Bei der Ausführungsform nach Fig. 2 ist eine austauschbare Drosselscheibe 22 mit einer Drosselöffnung 23 in die Ausbohrung 17 eingesetzt. Bei der Ausführungsform nach Fig. 3 ist die untere Gitterplatte mit festen Drosselöffnungen 24 versehen. Das Bodenteil 14 ist hier mit einer austauschbaren Diffusoreinheit 14a versehen, die beispielsweise mit einem Sperrstift 25 am Bodenteil 14 fixiert ist. Der Drosseleffekt und damit der Wasserfluß durch ein Brennelementenbündel 5 kann durch Austausch der Diffusoreinheit 14a gegen eine Einheit anderer Ausführung und mit einem anderen Diffusoreffekt geändert werden.

Zwischen der Ausbohrung 17 und dem in die Ausbohrung hineinragenden Teil des Bodenteils 14 bzw. der Diffusoreinheit 14a wird eine ringförmige Kammer 26 gebildet. Diese steht mit dem Strömungskanal 27 über den Spalt 28 zwischen der oberen Fläche 29 der Drosselscheibe 22 und der unteren Stirnfläche 30 des Bodenteils 14 bzw. zwischen der Bodenfläche 31 der Ausbohrung 17 und der unteren Stirnfläche 32 der Diffusoreinheit 14a in Verbindung. Aufgrund der Strömung entsteht in der Kammer 26 ein Unterdruck, wodurch auf das Bodenteil 14 eine nach unten gerichtete Kraft wirkt, die der nach oben gerichteten Kraft entgegenwirkt, welche infolge der Strömungswiderstände in den Brennelementenkästen 13 auftritt.

In dem gezeigten Brennelementenbündel sind die Brennelementenkästen 13 mit Anschlußteilen 33 versehen, die in Öffnungen in dem Bodenteil 14 hineinragen. Zur gleichmäßigen Verteilung des Kühlwasserflusses zwischen den vier Kästen 13 sind die Stützplatten 34 für die Brennstäbe 35 mit mehreren Öffnungen 36 versehen, die zusammen einen solchen Querschnitt haben, daß eine für die Verteilung des Kühlwasserflusses zweckmäßige Drosselung erreicht wird. Durch die Erfindung erhält man erheblich mehr Möglichkeiten zur Verteilung der Drosselung am Wassereinlaß in der unteren Gitterplatte 6 und in den Stützplatten 34 in den Brennelementenkästen 13. Die Bemessung der Drosselung, d. h. des Kühlwasserflusses, kann dadurch geschehen, daß man Bodenteile 14 mit unterschiedlichem Diffusoreffekt verwendet. Eine Änderung des Kühlwasserflusses im Brennstoffkern kann in einer hinsichtlich der Handhabung einfacheren Weise durchgeführt werden, da ein Austausch von Drosselscheiben in der unteren Gitterplatte nicht erforderlich ist.

## Patentansprüche

1. Siedewasserreaktor, der einen Brennstoffkern (4) mit mehreren Brennelementenbündeln (5) enthält, die von einer unteren Gitterplatte (6) getragen werden, welche mit Drosselöffnungen (23, 24) versehen ist, um die gewünschte Verteilung des Kühlwasserflusses auf die Brennelementenbündel (5) sicherzustellen, und welche Aufnahmevorrichtungen zum Anschluß des Bodenteils (14) der Brennelementenbündel (5) an die untere Gitterplatte (6) enthält, wobei das Bodenteil (14) mit einem Diffusor (16) versehen ist, der den Drosseleffekt der Drosselöffnung (23, 24) in der unteren Gitterplatte (6) und damit den Druckabfall an der Drosselöffnung (23, 24) und dem Bodenteil (14) herabsetzt, dadurch gekennzeichnet, daß die Aufnahmevorrichtung für das Bodenteil (14) eines Brennelementenbündels von einer Ausbohrung (17) in der unteren Gitterplatte (6) gebildet wird, in deren Boden die Drosselöffnung (23, 24) angeordnet ist, und daß diese Ausbohrung (17) und das Bodenteil (14) des Brennelementenbündels eine ringförmige Kammer (26) bilden, die mit der Öffnung (27) im Bodenteil (14) über einen Spalt (28) zwischen dem Bodenteil (14) und dem Boden (31) der Ausbohrung (17) oder zwischen dem Bodenteil (14) und einer Drosselscheibe (22) im unteren Teil der Ausbohrung (17) in Verbindung steht.

2. Siedewasserreaktor nach Anspruch 1, dadurch gekennzeichnet, daß im Bodenteil (14) der Brennelementenbündel (5) ein austauschbarer Diffusor (14a) angeordnet ist.

3. Siedewasserreaktor nach einem der vorhergehenden Ansprüche, dadurch gekennzeichnet, daß die Brennstäbe (35) jedes Brennelementenbündels (5) in mehrere parallele Bündel aufgeteilt sind, die jeweils von einem Brennelementenkasten (13) umgeben sind, und daß das Brennelementenbündel (5) Drosselungen (36) enthält, welche die gewünschte Verteilung des Kühlwasserflusses auf die parallelen Brennelementenkästen (13) sicherstellen.

4. Siedewasserreaktor nach Anspruch 3, dadurch gekennzeichnet, daß die Drosselungen (36) in den Brennelementenbündeln (5) in Platten (34) im unteren Teil der Brennelementenkästen (13) angeordnet sind.

### Claims

1. Boiling water reactor comprising a fuel core (4) with a plurality of fuel rod assemblies (5) carried by a lower grid plate (6) provided with throttle openings (23, 24) to secure the desired distribution of the flow of cooling water among the fuel rod assemblies (5), the grid plate having receiving devices for connecting the bottom unit (14) of the fuel rod assembly (5) to the lower grid plate (6), said bottom unit (14) being provided with a diffusor (16) for reducing the throttling effect of the throttle opening (23, 24) in the lower grid plate (6) and thereby reducing the pressure drop over the throttle opening (23, 24) and the bottom unit (14), characterized in that the receiving device for the bottom unit (14) of a fuel rod assembly consists of a bore (17) in the lower grid plate (6), at the bottom of which the throttle opening (23, 24) is arranged, and that said bore (17) and said botton unit (14) of the fuel rod assembly are shaped to form a circular chamber (26) communicating with the opening (27) in said bottom unit (14) through a space (28) between the bottom unit (14) and the bottom (31) of said bore (17) or between said bottom unit (14) and a throttling disc (22) in the lower part of said bore (17).

2. Boiling water reactor according to claim 1, characterized in that the bottom unit (14) of the fuel rod assembly (5) is provided with an exchangable diffusor (14a).

3. Boiling water reactor according to any of the preceding claims, characterized in that the fuel rods (35) of each fuel rod assembly (5) are divided into several parallel bundles, each bundle being surrounded by a fuel element case (13), and that the fuel rod assembly (5) is provided with throttle devices (36) securing the desired distribution of the flow of cooling water among the parallel fuel element cases (13).

4. Boiling water reactor according to claim 3, characterized in that the throttle devices (36) of the fuel rod assemblies (5) are arranged in plates (34) in the lower part of the fuel element cases (13).

### Revendications

1. Réacteur à eau bouillante, qui contient un coeur (4) en matière combustible, ayant plusieurs grappes d'éléments combustibles (5) supportés par une plaque inférieure formant grille (6), qui est munie d'ouvertures à étranglement (23, 24) pour assurer la répartition souhaitée du courant d'eau de refroidissement sur les grappes d'éléments combustibles (5) et qui comporte des dispositifs de réception pour relier la partie formant le fond (14) de la grappe d'éléments combustibles (5) à la plaque inférieure formant grille (6), la partie formant le fond (14) étant munie d'un diffuseur (16) qui diminue l'effet d'étranglement de l'ouverture à étranglement (23, 24) de la plaque inférieure formant grille (6) et ainsi la perte de charge sur l'ouverture à étranglement (23, 24) et sur la partie formant le fond (14), caractérisé en ce que le dispositif de réception de la partie formant le fond (14) d'une grappe d'éléments combustibles est formé d'un alésage (17) dans le fond duquel est disposée l'ouverture à étranglement (23, 24) et en ce que cet alésage (17) et la partie formant le fond (14) de la grappe d'éléments combustibles forment une chambre annulaire (26) qui communique avec l'ouverture (27) de la partie formant le fond (14) par un interstice (28) entre la partie formant le fond (14) et le fond (31) de l'alésage (17) ou entre la partie formant le fond (14) et un disque d'étranglement (22) disposé à la partie inférieure de l'alésage (17).

2. Réacteur à eau bouillante suivant la revendication 1, caractérisé en ce que, dans la partie formant le fond (14) de la grappe d'éléments combustibles (5) est disposé un diffuseur remplaçable (14a).

3. Réacteur à eau bouillante suivant l'une des revendications précédentes caractérisé en ce que les crayons combustibles (35) de chaque grappe d'élément combustible (5) sont répartis en plusieurs grappes parallèles entourées respectivement d'un boîtier-canal (13), et en ce que la grappe d'éléments combustibles (5) comporte des étranglements (36) qui assurent la répartition souhaitée du courant d'eau de refroidissement sur les boîtiers-canaux (13) parallèles.

4. Réacteur à eau bouillante suivant la revendication 3, caractérisé en ce que les étranglements (36) des grappes d'éléments combustibles (5) sont ménagés dans des plaques (34) à la partie inférieure des boîtiers-canaux (13).

FIG. 1

## FIG. 2

## FIG. 3